# EUROPEAN PATENT APPLICATION

(11) **EP 0 818 513 A1**
(43) Date of publication of application: **14.01.1998**
(21) Application number: 97305078.4
(22) Date of filing: 10.07.1997
(51) Int. Cl.: C09B 62/04

(54) **Reactive dyes, their preparation and use**

(30) Priority: 10.07.1996 GB 9614482
(71) Applicant: ZENECA LIMITED, London W1Y 6LN (GB)
(72) Inventor: Ebenezer, Warren James, Dr., Stockport, Cheshire SK7 2JQ (GB)
(74) Representative: Coleiro, Raymond

(57) **Abstract**

A reactive dye suitable for colouring cellulosic textile substrates has the Formula (1): 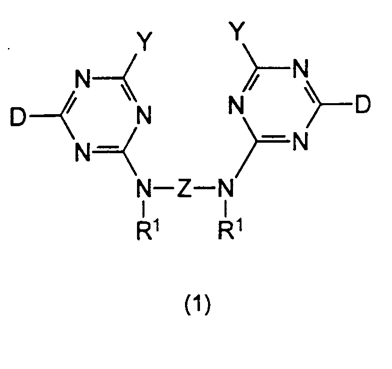 wherein:
each D independently is a chromophoric group;
each R¹ independently is H or optionally substituted alkyl;
each Y independently is a labile atom or group; and
   Z is a straight-chain poly(alkylene oxide) group.

## Description

This invention relates to reactive dyes, their preparation and use.

The use of a reactive dyes for colouring cellulosic substrates has been known for many years. To achieve strong depths of shade there is a need for reactive dyes having good build up properties, preferably with good wash-off properties so that any unfixed dye can be removed at the end of the dyeing process to prevent a lower staining of adjacent fibres during domestic washing.

EP-A-0748850, acknowledged under Art. 54(3) EPC, discloses dyestuffs of the formula: 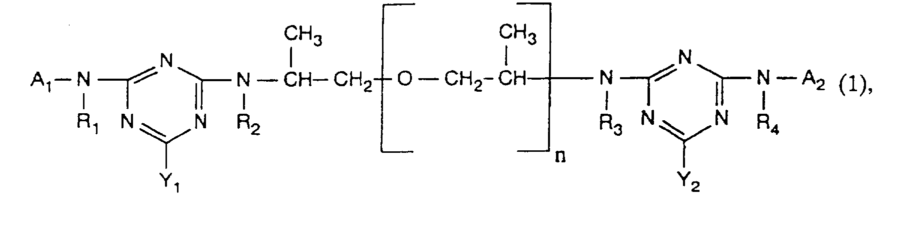 wherein:
A₁ and A₂ independently of one another are the residues of a monoazo-, polyazometal complex azo, anthraquinone-, phthalocyanine-, formazan, azomethine, dioxazine, phenazine-, stilbene-, triphenylmethane-, xanthene-, thioxanthone-, nitroaryl-, napthoquinone-, pyrenequinone or perylenetetracarbimide- dyestuffs, R₁, R₂, R₃ and R₄ indepedentlly of one another are hydrogen or optionally substituted C₁₋₄ alkyl, Y₁ and Y₂ independently of one another are halogen, carboxypyridinium, optionally substituted amino or a heterocyclic residue bound to a nitrogen atom, and n is a number from 1 to 7.
According to the present invention there is provided a dye of the Formula (1): 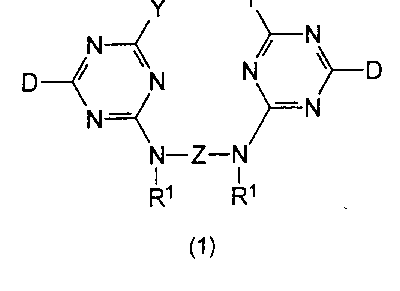 wherein:
each D independently is a chromophoric group;
each R¹ independently is H or optionally substituted alkyl;
each Y independently is a labile atom or group; and
Z is a straight-chain poly(alkylene oxide) group.

When a group represented by R¹ is substituted the substituent is preferably selected from hydroxy, amino, halo, carboxy and sulpho. Preferably each R¹ independently is H or C₁₋₄-alkyl, more preferably H or methyl, especially H.

By a labile atom or group it is meant an atom or group which is bound by a chemical bond to the triazine nucleus, which atom or group is displaceable by a hydroxyl group of cellulose under mildly alkaline aqueous conditions to form a covalent bond between the triazine nucleus and cellulose. As examples of such atoms or groups there may be mentioned halogen atoms, for example F and Cl; sulphonic acid groups; thiocyano groups; quaternary ammonium groups, for example trialkylammonium groups and optionally substituted pyridinium groups, for example 3- and 4- carboxy pyridinium groups.

The poly(alkylene oxide) group represented by Z is preferably of the formula -CₘHₙ(-O-CₘHₙ)_{q}- wherein each m independently has a value of 2 to 6, preferably 2 to 4, more preferably 2 or 3; the corresponding n has a value of (2 x m) and q has a value of 1 to 20, preferably 1 to 10, more preferably 1, 2 or 3.

Preferably the -CₘHₙ- group at each end of the -CₘHₙ(-O-CₘHₙ)_{q}- group are identical to each other, for example as in -C₂H₄OC₂H₄-, -C₂H₄OC₃H₆OC₂H₄-, -C₃H₆OC₂H₄OC₃H₆-, -C₃H₆-O-C₄H₈-O-C₃H₆- and -C₂H₄OC₂H₄OC₂H₄-.

Examples of preferred groups represented by -CₘHₙ- include -C₂H₄- and -C₃H₆-, especially -CH₂CH₂- and -(CH₂)₃-.

The chromophoric groups represented by D preferably each independently comprise an azo, anthraquinone, phthalocyanine, triphenodioxazine or formazan group.

Preferred azo groups are monoazo and disazo groups. Preferred monoazo groups are formula L-N=N-L¹-NR¹ - wherein L is an aryl or heteroaryl group, L¹ is an arylene group and each R¹ independently is as hereinbefore defined.

It is preferred that each aryl or arylene group independently is a mono- or di-cyclic aryl or arylene group. Preferred aryl groups are optionally substituted phenyl and optionally substituted naphthyl, and preferred arylene groups are optionally substituted phenylene and optionally substituted naphthylene. Preferred heteroaryl groups are pyridonyl and pyrazolonyl.

A first preferred monoazo group is of the Formula (2) or salt thereof: 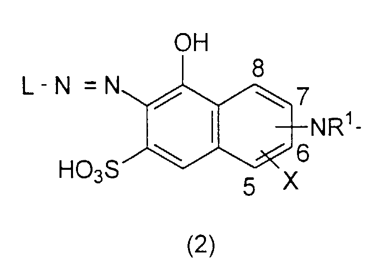 wherein:
X is H or sulpho; and
L and R¹ are as hereinbefore defined.

L is preferably optionally substituted phenyl or naphthyl, especially a phenyl or naphthyl group having at least one sulpho substituent. Further optional substituents which may be present on L include a halogen atom, especially chlorine; an alkyl radical, especially C₁₋₄-alkyl, more especially methyl; an acylamino radical, especially acetylamino, benzamido or sulphonated benzamido; amino; hydroxy; and an alkoxy radical, especially C₁₋₄-alkoxy, more especially methoxy.

As examples of phenyl groups having at least one sulpho substituent there may be mentioned 2-, 3- or 4-sulphophenyl; 2-sulpho-4-nitrophenyl; 2-sulpho-5-nitrophenyl; 4-sulpho-2-methylphenyl; 5-sulpho-2-methylphenyl; 2-sulpho-4-methylphenyl; 5-sulpho-2-methoxyphenyl; 2-sulpho-4-methoxyphenyl; 4-sulpho-2-chlorophenyl; 5-sulpho-2-carboxyphenyl; 2,4-disulphophenyl; 2,5-disulphophenyl; and 3,5-disulphophenyl.

As examples of naphthyl groups having at least one sulpho substituent there may be mentioned 1 -sulphonaphth-2-yl; 1,5,7-trisulphonaphth-2-yl; 3,6, 8-trisulphonaphth-2-yl; 5,7-disulphonaphth-2-yl; 6-sulphonaphth-2-yl; 4-, 5-, 6-, or 7-sulphonaphth-1-yl; 4,8-disulphonaphth-1-yl; 3,8-disulphonaphth-1-yl; 2,5,7-trisulphonaphth-1-yl; and 3,5,7-trisulphonaphth-1-yl.

Preferred optional substituents which may be present on L¹ are those mentioned above for L.

In groups of Formula (2), -NR¹- is preferably at the 6-, 7- or 8-position, especially the 6- or 8- position. When -NR¹- is at the 8-position, it is preferred that X is a sulpho group at the 5- or 6- position.

A second preferred monoazo group is of the Formula (3) or a salt thereof: 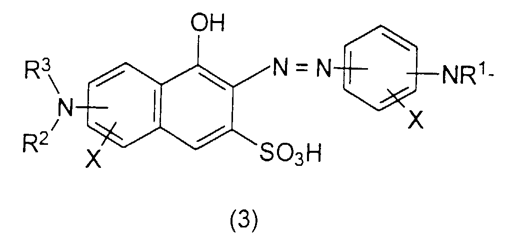 wherein:
R³ is H or C₁₋₄-alkyl;
R² is H, C₁₋₄-alkyl, C₁₋₄-alkanoyl or optionally substituted benzoyl, especially benzoyl or sulphobenzoyl, acetyl, propanoyl, n-butanoyl or iso-butanoyl; and
X and R¹ are as hereinbefore defined.

A third preferred monoazo group is of the Formula (4) or salt thereof: 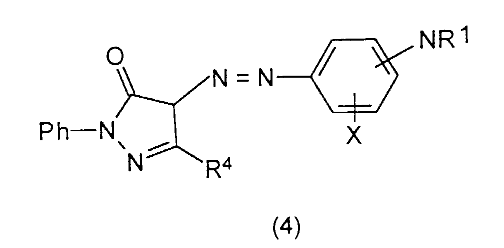 wherein:
Ph is an optionally substituted phenyl group, especially sulphophenyl;
R⁴ is CN, CH₃ or carboxy; and
R¹ and X are as hereinbefore defined.

A preferred disazo group is of Formula (5) or salt thereof:

**L-N=N-A-N=N-B-NR**^{**1**}**-** **(5)**

wherein:
A and B are each independently optionally substituted phenylene or naphthylene; and
R¹ and L are as hereinbefore defined.

It is preferred that B is optionally substituted naphthylene and A is optionally substituted phenylene. The optional substituents which may be present on A or B are preferably independently selected from halo, especially chloro; alkoxy, especially C₁₋₄-alkoxy; alkyl, especially methyl; sulpho; carboxy; hydroxy; amino; acylamino especially as acetamido, benzamido and sulphonated benzamido, and pyrimidinylamino or triazinylamino cellulose-reactive groups.

As Examples of groups represented by A and B there may be mentioned phenylene, sulphophenylene, ureidophenylene, 7-sulpho-1, 4-naphthylene, 6-sulpho-1,4-naphthylene and 8-sulpho-1,4-naphthylene.

A preferred anthraquinone group is of the Formula (6) or a salt thereof: 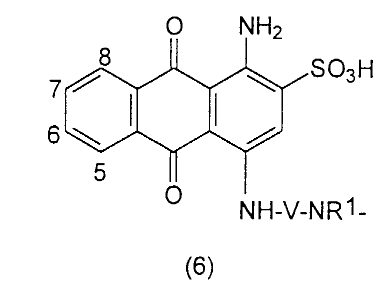 wherein the anthraquinone nucleus optionally contains a sulphonic acid group in the 5-, 6-, 7-, or 8-position; V is a divalent organic linking group, preferably of the benzene series; and R¹ is as hereinbefore defined.

V is preferably phenylene, diphenylene, or 4,4'-divalent stilbene or azobenzene radicals which are optionally sulphonated. It is preferred that V contains one sulphonic acid group for each benzene ring present therein.

A preferred phthalocyanine group is of the Formula (7) or a salt thereof: 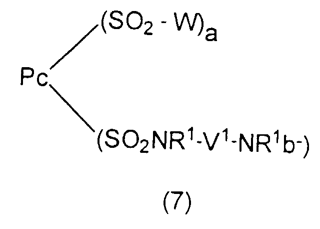 wherein Pc is a metallo-phthalocyanine nucleus, preferably copper or nickel phthalocyanine; each R¹ is as hereinbefore defined; each W independently is a hydroxy or a substituted or unsubstituted group, V¹ is a divalent organic linking group, preferably a C₁₋₄-alkylene or phenylene linking group; and a and b are each independently 1, 2 or 3 provided that a + b is not greater than 4.

A preferred triphenodioxazine group is of the Formula (8) or a salt thereof : 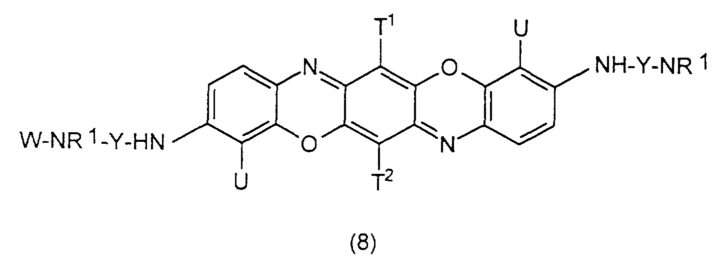 wherein :
each Y independently is a covalent bond, C₂₋₄-alkylene, phenylene or sulphophenylene;
U is H or SO₃H;
W is an optionally substituted triazine group;
T¹ and T² are halo, especially chloro, C₁₋₄-alkyl, or C₁₋₄-alkoxy; and each Z and R¹ independently is as hereinbefore defined.
Each Y is preferably -C₂H₄- or -C₃H₆-, U is preferably SO₃H, and
T¹ and T² are preferably Cl, methyl or ethyl.
W is preferably a triazine group having one or two a labile atoms or groups.

A preferred formazan group is of the Formula (9) or a salt thereof : 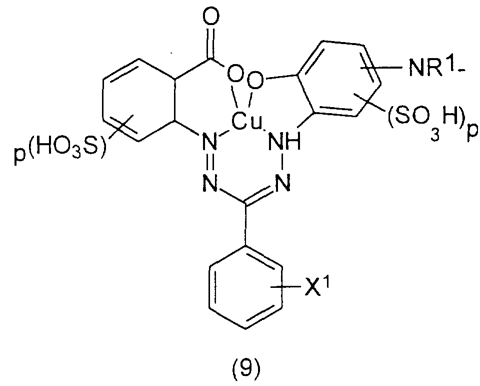 wherein :
X¹ is H, SO₃H or Cl;
each p independently has a value of 0, 1 or 2; and
R¹ is as hereinbefore defined;
provided that the formazan group has at least one, and preferably at least two, sulpho groups.

It is preferred that each p has a value of 1.

Dyes according to the invention may be prepared by a process comprising condensation of one or more reactive dyes having at least two reactive groups with a poly(alkylene oxide)diamine, preferably in a liquid medium. It is preferred that the condensation is performed at 10°C to 70°C, especially 20 to 50°C, more especially 20 to 40°C. The liquid medium is preferably an aqueous medium, especially water. The condensation is preferably performed at a pH in the range 7.1 to 11.5, more preferably 9 to 11. It is preferred to use an excess of the reactive dye, for example 2.1 to 3.1 moles of the reactive dye per mole of poly(alkylene oxide)diamine.

Examples of suitable poly(alkylene oxide)diamines which can be used in the process include H₂NCH₂CH₂OCH₂CH₂OCH₂CH₂NH₂, H₂N(CH₂)₃(OCH₂CH₂)₂O(CH₂)₃NH₂, H₂N(CH₂)₃O(CH₂)₄O(CH₂)₃NH₂, H₂N(CH₂)₃O(CH₂)₂O(CH₂)₃NH₂, CH₃NH(CH₂CH₂O)₂CH₂CH₂-NHCH₃.

Although dye formulae have been shown in the free acid form in this specification, the invention also includes dyes and processes using dyes in the salt form, particularly their salts with alkali metals such as the potassium, sodium, lithium or mixed sodium/lithium salt.

A further feature of the invention provides a process for the coloration of a substrate comprising applying thereto a dye of Formula (1).

Dyes of the invention are preferably applied to substrates at a pH above 7, more preferably at a pH of 7.1 to 13, especially 10 to 12. pH levels above 7 can be achieved by performing the process for coloration in the presence of an acid-binding agent.

The substrate is preferably a natural or artificial textile material containing amino or hydroxyl groups, for example textile material such as wool, silk, polyamides and modified polyacrylonitrile fibres, or more preferably a cellulosic textile material, especially cotton. For this purpose the dyes can be applied to a textile material at a pH above 7 by, for example, exhaust dyeing, padding or printing. Textile materials are coloured bright shades and possess good fastness to light and to wet treatments such as washing.

The new dyes are particularly valuable for colouring cellulosic textile materials. For this purpose the dyes are preferably applied to the cellulosic textile material at a pH above 7 in conjunction with a treatment with an acid-binding agent.

Preferred acid-binding agents include alkali metal carbonates, bicarbonates, hydroxides, metasilicates and mixtures thereof, for example sodium bicarbonate, sodium carbonate, sodium metasilicate, sodium hydroxide and the corresponding potassium salts. The dyes benefit from excellent build-up and high fixation.

The new dyes can be applied to textile materials containing amine groups, such as wool and polyamide textile materials, from a mildly acid or alkaline dyebath. The dyeing process can be carried out at a constant or substantially constant pH, that is to say the pH of the dyebath remains constant or substantially constant during the dyeing process, or if desired the pH of the dyebath can be altered at any stage of the dyeing process.

The dyes may be in liquid or solid form, for example in granular or powdered form.

The invention is illustrated but not limited by the following Examples in which all parts and percentages are by weight unless stated otherwise.

### Example 1

Preparation of

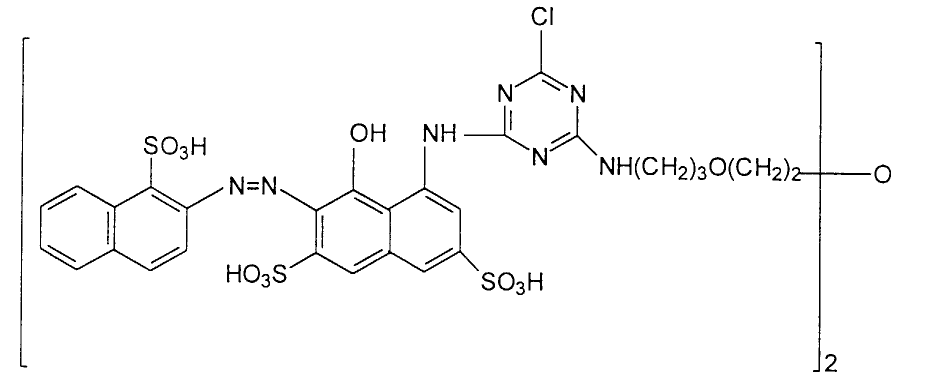

### Stage a)

2-(1-sulphonaphthyl-2-azo)-8-(4,6-dichloro-s-triazin-2-ylamino)-1-hydroxy naphthalene-3,6-disulphonic acid was prepared by condensing cyanuric chloride with 1-hydroxy-2-(1-sulphonaphthyl-2-azo)-8-aminonaphthalene-3,6-disulphonic acid at 0-5°C and pH6. The product of this stage a) is also available commercially as Cl Reactive Red 11 from BASF AG, Blackley, Manchester, United Kingdom.

### Stage b)

A solution of the product from stage a) (11.19, 7.5mmol) in water (500ml) was added slowly to a solution of 4,7,10-trioxa-1,13-tridecane diamine (0.7g, 3.2mmol) in water (150ml) adjusted and maintained at pH10. After 3½ hrs the mixture was salted with NaCI and the resultant precipitate filtered-off and dried to give a dark red solid (6.1g).

The solid showed satisfactory ¹H-NMR and C,H,N,S analysis, and a λmax at 520nm (Emax 50,600), λ½ = 98nm.

When applied to cotton under exhaust dyeing conditions the title dye showed outstanding build-up.

### Example 2

A solution of the product from Example 1, stage a) (12.7g, 8.6mmol) in water (250ml) was added slowly to a solution of 2,2'-(ethylenedioxy)bis(ethylamine) (0.49g, 3.2mmol) in mmol) in water (100ml) adjusted and maintained at pH 11. After 3 hrs the mixture was salted with NaCI and the resultant precipitate filtered-off and dried to give a dark red solid (6.4g). The solid showed a λmax at 518nm (Emax 60030),λ½ = 93nm.

When applied to cotton under standard exhaust dyeing conditions the dye showed outstanding build up.

### Examples 3 to 15

Further dyes were prepared by the general method of Example 1 except that in place of Cl Reactive Red 11 there was used the dye described in the second column of Table 1 and in place of 4,7,10-trioxa-1,13-tridecane diamine there was used the diamine listed in the third column. The Amax, Emax and λ½ of the resultant dyes are shown in the final three columns.

The dyes referred to in Table 1 have the following structures and all are commercially available from sources identified in the Colour Index International, except Reactive Yellow X and Reactive Red X which were obtained from BASF AG, Blackley, Manchester, England:

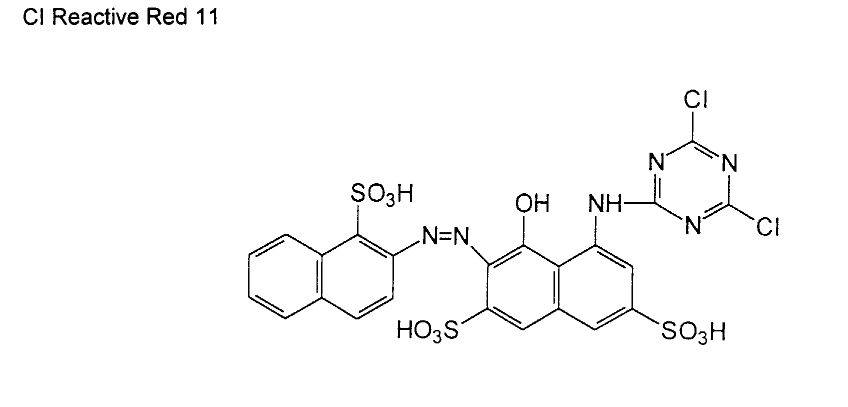

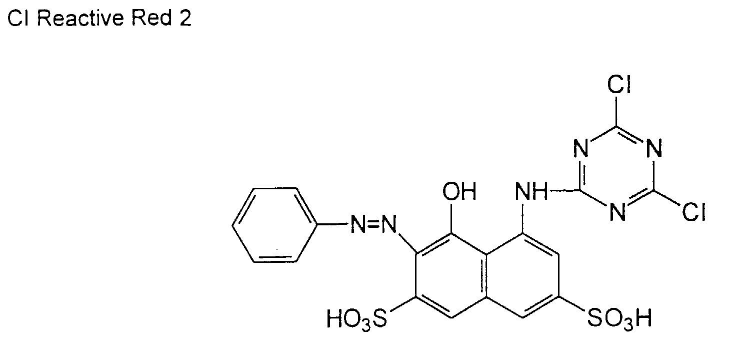

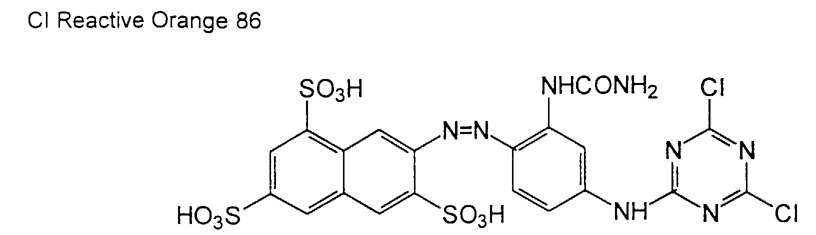

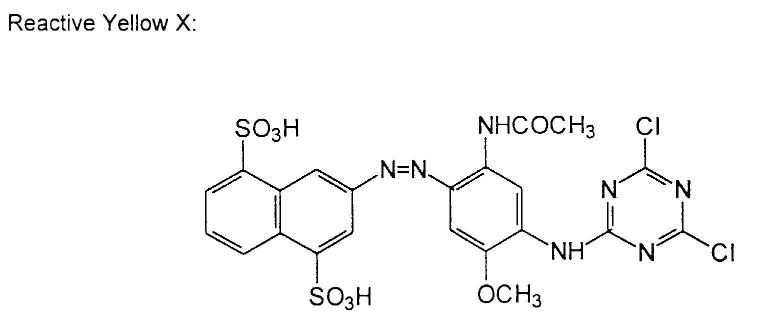

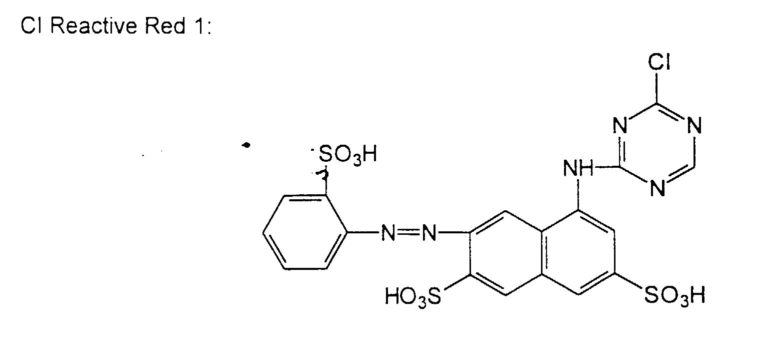

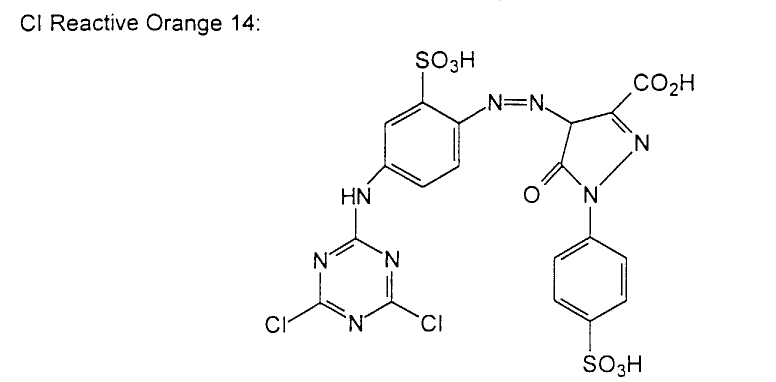

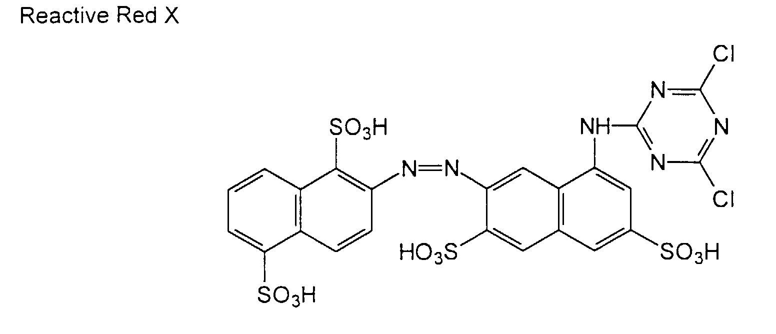

**Table 1**

| Example No | CI Reactive No. | Diamine | λmax (nm) | Emax | λ½ (nm) |
|---|---|---|---|---|---|
| 3 | Red 11 | CH₃NH(C₂H₄O)₂C₂H₄NHCH₃ | 521 | 65120 | 82 |
| 4 | Red 11 | H₂NC₃H₆OC₂H₄OC₃H₆NH₂ | 520 | 58590 | 75 |
| 5 | Red 2 | CH₃NH(C₂H₄O)₂C₂H₄NHCH₃ | 518 | 63450 | 82 |
| 6 | Red 2 | H₂N(C₂H₄O)₂C₂H₄NH₂ | 514 | 50750 | 96 |
| 7 | Red 2 | H₂NC₃H₆OC₂H₄OC₃H₆NH₂ | 515 | 48700 | 78 |
| 8 | Red 2 | H₂NC₃H₆O(C₂H₄O)₂C₃H₆NH₂ | 513 | 51700 | 95 |
| 9 | Orange 86 | H₂N(C₂H₄O)₂C₂H₄NH₂ | 419 | 59860 | 111 |
| 10 | Orange 86 | H₂NC₃H₆OC₂H₄OC₃H₆NH₂ | 425 | 54120 | 111 |
| 11 | Orange 86 | H₂NC₃H₆O(C₂H₄O)₂C₃H₆NH₂ | 422 | 61750 | 127 |
| | Reactive No. | | | | |
| 12 | Yellow X | CH₃NH(C₂H₄O)₂C₂H₄NHCH₃ | 430 | 45490 | 141 |
| 13 | Yellow X | H₂N(C₂H₄O)₂C₂H₄NH₂ | 427 | 45120 | 141 |
| 14 | Yellow X | H₂NC₃H₆OC₂H₄OC₃H₆NH₂ | 427 | 46790 | 136 |
| 15 | Yellow X | H₂NC₃H₆O(C₂H₄O)₂C₃H₆NH₂ | 522 | 50400 | 155 |
| | CI Reactive No. | | | | |
| 16 | Red 1 | H₂N(C₂H₄O)₂C₂H₄NH₂ | 506 | 48000 | 90 |
| 17 | Red 1 | H₂NC₃H₆O(C₂H₄O)₂C₃H₆NH₂ | 506 | 51300 | 90 |
| 18 | Orange 14 | H₂N(C₂H₄O)₂C₂H₄NH₂ | 436 | 48900 | 90 |
| | Reactive No. | | | | |
| 19 | Red X | H₂N(C₂H₄O)₂C₂H₄NH₂ | 513 | 74400 | 73 |
| 20 | Red X | H₂NC₃H₆O(C₂H₄O)₂C₃H₆NH₂ | 514 | 77900 | 71 |
| 21 | Red X | MeNH(C₂H₄O)₂C₂H₄NHMe | 543 | 80300 | 75 |

All of the dyes listed in Table 1 were applied to cotton under exhaust dyeing conditions and were found to have good build-up properties.

## Claims

1. A dye of the Formula (1) : 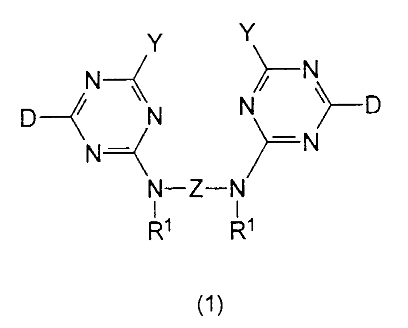 wherein:
each D independently is a chromophoric group;
each R¹ independently is H or optionally substituted alkyl;
each Y independently is a labile atom or group; and
Z is a straight-chain poly(alkylene oxide) group.

2. A dye according to claim 1 wherein Z is of the formula -CₘHₙ(-O-CₘHₙ)_{q}- wherein each m independently has a value of 2 to 6, the corresponding n has a value of (2xm), and q has a value of 1 to 20.

3. A dye according to claim 2 wherein the -CₘHₙ- groups at each end of the -CₘHₙ(-O-CₘHₙ)_{q}- group are identical to each other.

4. A dye according to claim 2 or claim 3 wherein each m independently has a value of 2 or 3, the corresponding n has a value of (2xm) and q has a value of 1,2 or 3.

5. A dye according to any one of the preceding claims wherein D is a monoazo or disazo group.

6. A dye according to any one of the preceding claims wherein D is a monoazo group of the Formula (2) or a salt thereof: 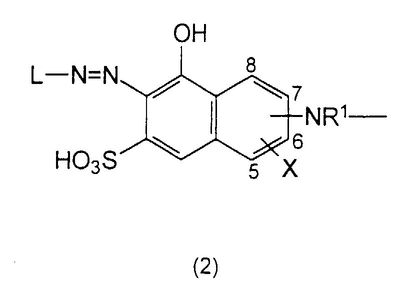 wherein
X is H or sulpho;
L is an aryl or heteroaryl group; and
R¹ is H or optionally substituted alkyl.

7. A dye according to any one of the preceding claims wherein each R¹ independently is H or C₁₋₄-alkyl.

8. A dye according to any one of the preceding claims wherein each Y independently is a halogen atom or a quaternary ammonium group.

9. A process for the coloration of a substrate comprising applying thereto a dye according to any one of claims 1 to 8
